# EUROPÄISCHE PATENTSCHRIFT

(11) **EP 0 752 390 B1**
(45) Veröffentlichungstag und Bekanntmachung des Hinweises auf die Patenterteilung: **07.10.1998**
(21) Anmeldenummer: 96108385.4
(22) Anmeldetag: 25.05.1996
(51) Int. Cl.: C01C 3/02, B01J 35/04

(54) **Verfahren zur Herstellung von Blausäure**
Process for the preparation of hydrogen cyanide
Procédé pour la production d'acide cyanhydrique

(30) Priorität: 03.07.1995 DE 19524158
(43) Veröffentlichungstag der Anmeldung: 08.01.1997
(73) Patentinhaber: DEGUSSA AG, 60311 Frankfurt (DE)
(72) Erfinder: Hippel, von Lukas, Dr., 63755 Alzenau (DE); Bussek, Christian, Dr., 63796 Kahl (DE); Arntz, Dietrich, Dr., 61440 Oberursel (DE)

(56) Entgegenhaltungen:
- EP-A- 0 074 504
- EP-A- 0 299 175
- EP-A- 0 407 809
- WO-A-88/06941
- DE-B- 1 068 681
- DE-B- 1 205 499

## Beschreibung

Die vorliegende Erfindung betrifft ein Verfahren zur Herstellung von Blausäure nach dem sogenannten BMA-Verfahren durch Reaktion von Methan und Ammoniak zu Blausäure in einem durch Brenngase beheizten und mit einem Katalysator beschichteten Reaktor.

Nach dem sogenannten BMA-Verfahren werden niedere Kohlenwasserstoffe, insbesondere Methan, mit Ammoniak bei Temperaturen von etwa 1000 bis 1350°C in Gegenwart eines Katalysators zu Blausäure und Wasserstoff umgesetzt, siehe Ullmann's Encyclopedia of Industrial Chemistry, 5th Ed. (1987), Vol. A8, 162 - 163. Die Reaktion wird üblicherweise in Rohrbündelreaktoren durchgeführt. Die Reaktionsrohre bestehen im wesentlichen aus Aluminiumoxid und sind auf ihrer Innenfläche mit einer katalytisch wirksamen Beschichtung versehen, welche meist Platin enthält. Die Reaktionsrohre sind in einer Brennkammer aufgehängt und werden durch eine in der Brennkammer ablaufende Verbrennung eines Brenngases, gewöhnlich Methan oder Erdgas, in einem sauerstoffhaltigen Gas auf die Reaktionstemperatur aufgeheizt. Die Reaktionsrohre sind typischerweise etwa 2 m lang und weisen Innendurchmesser von etwa 16 bis 18 mm auf.

Die verwendeten Rohre müssen gasdicht und gegen die hohen Temperaturen beständig sein. Auf der Innenfläche dieser Rohre wird der Katalysator abgeschieden. Eine bevorzugte katalytische Beschichtung enthält Platin und Aluminiumnitrid.

Die EP 0 407 809 B1 beschreibt ein besonders vorteilhaftes Verfahren zur Herstellung dieser katalytisch wirksamen Beschichtung, welches sich dadurch auszeichnet, daß schon mit Beladungen von nur 2 mg Platin/cm² der Innenfläche der Reaktionsrohre hochaktive Beschichtungen erhalten werden.

Zur Erzeugung von Blausäure wird eine Mischung von Ammoniak und Methan (natürliches oder raffiniertes Gas mit einem Gehalt von 50 bis 100 Vol.% Methan) durch die Reaktionsrohre geleitet und sehr schnell auf etwa 1300°C bei Normaldruck aufgeheizt. Um die Bildung von störenden Rußablagerungen auf den Innenflächen zu vermeiden, wird das Molverhältnis Ammoniak zu Methan in einem Bereich von 1,01 bis 1,08 aufrecht erhalten.

Die DE-AS 12 05 499 beschreibt eine Vorrichtung zur Durchführung endothermer Gasreaktionen, insbesondere für die Umsetzung von Methan und Ammoniak zu Blausäure. Die Vorrichtung besteht aus mindestens einem gasbeheizten, durch zwei konzentrische Zylinderwände begrenzten Reaktionsraum aus hochtemperaturbeständigem Material. Die äußere Zylinderwand des ringförmigen Reaktionsraumes ist konzentrisch von einem ringförmigen Heizraum umgeben. Mehrere solcher Vorrichtungen können parallel zueinander in einem gemeinsamen Formstein angeordnet sein.

Mit den aus dem Stand der Technik bekannten Verfahren zur Herstellung von Blausäure werden Ausbeuten von Blausäure, bezogen auf das eingesetzte Methan, von etwa 90 % erreicht. Die zur Erzeugung eingesetzte Energie beträgt etwa 40 MJ/kg erzeugter Blausaure.

Aufgabe der vorliegenden Erfindung ist es, ein verbessertes Verfahren zur Herstellung von Blausäure anzugeben, welches gegenüber dem Stand der Technik einen wesentlich verringerten Energieeinsatz pro Kilogramm erzeugter Blausäure und eine verbesserte Raum-Zeit-Ausbeute aufweist. Weiterhin ist es Aufgabe der Erfindung, ein einfacheres Reaktorkonzept mit einem verbesserten Oberflächen/Volumen-Verhältnis für die Synthese von Blausäure anzugeben, welches sich durch eine kompakte Bauweise und niedrige Investitionskosten auszeichnet.

Diese Aufgabe wird durch ein Verfahren zur Herstellung von Blausäure nach dem sogenannten BMA-Verfahren durch Reaktion der Reaktanden Methan und Ammoniak zu Blausäure in einem durch Verbrennung eines Brenngases beheizten und mit einem Katalysator beschichteten Reaktor gelöst. Das Verfahren ist dadurch gekennzeichnet, daß der Reaktor in monolithischer Form mit einer gesonderten Anordnung von Heiz- und Reaktionskanälen aufgebaut ist, wobei die Heizkanäle vom Brenngas und einem sauerstoffhaltigen Gas und die auf ihren Innenwandungen mit dem Katalysator beschichteten Reaktionskanäle von den Reaktanden durchströmt werden und daß das Brenngas in den Heizkanälen verbrannt wird.

Die endotherme Umsetzung von Methan und Ammoniak zu Blausäure wird bei einer Reaktionstemperatur zwischen 1000 und 1350°C am Katalysator in den Reaktionskanälen durchgeführt. Zur Aufrechterhaltung der Reaktionstemperatur und zur Zufuhr der notwendigen Energie für die endotherme Reaktion wird ein Gemisch aus einem Brenngas und einem sauerstoffhaltigen Gas, zum Beispiel Verbrennungsluft, in die Heizkanäle eingeführt und in den Kanälen verbrannt. Bei den Brenngasen kann es sich zum Beispiel um Methan oder Erdgas handeln. Das Gemisch aus Brenngas und Verbrennungsluft wird beim Eintritt in die Heizkanäle durch in die Heizkanäle eingeführte elektrische Heizdrähte gezündet.

Durch die Zusammenfassung von Heiz- und Reaktionskanälen in einer monolithischen Anordnung ergeben sich vielfältige Optimierungsmöglichkeiten, die alle zu einem verminderten Energiebedarf pro Kilogramm erzeugter Blausäure führen.

Wegen des monolithischen Aufbaus des Reaktors stehen Heizkanäle und Reaktionskanäle in einem innigen Kontakt. Der Querschnitt der Kanäle und ihre Wandstärken können ohne Verlust von mechanischer Stabilität verringert werden. Wandstärken von 0,1 bis 1 mm sind völlig ausreichend. Die Querschnittsform der Kanäle ist weitgehend beliebig, es haben sich jedoch dreieckige, sechseckige, rechteckige und insbesondere quadratische Kanäle besonders bewährt. Die Dichte der Kanäle über den Querschnitt des Reaktors kann zwischen 0,1 und 100 cm⁻² liegen, bevorzugt zwischen 0,1 und 50 cm⁻².

Heiz- und Reaktionskanäle des Reaktors können abwechselnd in Lagen übereinander angeordnet werden, wobei die Achsenrichtungen der Heiz- und Reaktionskanäle einen Winkel zwischen 0 und 90° einschließen können. Beträgt der Winkel 0°, so liegen Heiz- und Reaktionskanäle parallel und können im Gleich- oder Gegenstrom von den Heiz- und Reaktionsgasen durchströmt werden. Die Verwendung von Gegenstrom ist energetisch bevorzugt.

Ein Winkel größer als 0° zwischen den Achsenrichtungen von Heiz- und Reaktionskanälen ermöglicht eine leichtere Trennung der Zufuhr von Heiz- und Reaktionsgasen. Ein Spezialfall stellt die Kreuzstromanordnung mit einem Winkel von 90° dar.

Konventionelle Reaktionsrohre für das BMA-Verfahren haben Durchmesser von etwa 25 mm mit Wandstärken von etwa 2 mm. Der Vergleich mit den obengenannten Abmessungen der erfindungsgemäß einzusetzenden monolithischen Anordnung zeigt, daß bei ihr die Wärmeübertragung von den Verbrennungsgasen auf die Reaktionsmedien wesentlich besser vonstatten geht als bei den konventionellen Rohrbündelreaktoren. Daraus folgt ein verringerter Energieeinsatz pro Kilogramm produzierter Blausäure.

In den nachfolgenden Beispielen konnte eine Halbierung des Energieeinsatzes erzielt werden. Durch Optimierung der Geometrie der Monolithe scheint eine Verringerung des Energieeinsatzes gegenüber den konventionellen Rohrbündelreaktoren auf ein Viertel als möglich.

Ein weiterer Vorteil des erfindungsgemäßen Verfahrens ist der kompakte Aufbau des monolithischen Reaktors. Dadurch ist eine wesentliche Erhöhung der Raum-Zeit-Ausbeute möglich. Sie kann unter optimalen Bedingungen verdoppelt werden. Damit kann dieselbe Produktionsmenge mit wesentlich kleineren Anlagen erzeugt werden.

Bei einem Reaktor mit parallelen Heiz- und Reaktionskanälen ist ebenfalls eine lagen- oder reihenweise Anordnung der Heiz- bzw. Reaktionskanäle bevorzugt, da hierdurch die Zu- und Abfuhr der Heiz- und Reaktionsgase erleichtert wird. Es können auch jeweils mehrere Kanalreihen für die Beheizung und mehrere Kanalreihen für die Synthese zusammengefaßt werden. Hierbei sollte allerdings die Dicke der so entstehenden Schichten aus Heiz- bzw. Reaktionskanälen etwa 25 mm nicht überschreiten, um den Wärmeaustausch zwischen Heiz- und Reaktionskanälen nicht übermäßig zu behindern.

Neben der lagenweisen Anordnung von Heiz- und Reaktionskanälen sind bei parallelen Kanalachsen auch beliebige Verteilungen von Heiz- und Reaktionskanälen über den Querschnitt des Reaktors möglich, wie zum Beispiel die Anordnung entsprechend einem Schachbrettmuster.

Die Wandungen der Kanäle des Reaktors müssen gasdicht sein, damit die Reaktanden nicht in die Heizkanäle übertreten können und umgekehrt. Als Material für den Reaktor eignen sich zum Beispiel Keramiken aus Oxiden, Karbiden und Nitriden sowie Mischungen davon. Es können jedoch auch metallische Reaktoren mit geeigneten katalytisch aktiven Beschichtungen eingesetzt werden. Handelt es sich bei der Verwendung von Keramiken um poröse Materialien, so müssen die Wandungen des Reaktors gasdicht beschichtet werden. Bevorzugt wird der Reaktor aus alpha- oder gamma-Aluminiumoxid gefertigt. Herstellungsbedingt kann dieses Material in geringem Umfang auch andere Oxide enthalten

Der erfindungsgemäß zu verwendende Reaktor in monolithischer Form kann im Falle paralleler Heiz- und Reaktionskanäle mit Hilfe bekannter Extrusionstechniken aus den keramischen Materialien hergestellt werden. Die Herstellung von metallischen Monolithen mit parallelen Strömungskanälen gehört ebenfalls zum Stand der Technik. Bei einer kreuzweisen Orientierung von Heiz- und Reaktionskanälen zueinander müssen die Lagen aus Heiz- und Reaktionskanälen separat gefertigt und anschließend übereinander gestapelt werden.

Für die katalytische Beschichtung der Reaktionskanäle können verschiedene Techniken eingesetzt werden. Für die Fertigung kleiner Stückzahlen eignet sich zum Beispiel das Füllen der Reaktionskanäle mit der Beschichtungssuspension mittels einer Spritze. Danach läßt man die überschüssige Beschichtungsdispersion auslaufen und bläst eventuell noch verschlossene Reaktionskanäle mit Preßluft frei. Daran schließen sich die üblichen Calcinier- und Formierbehandlungen der katalytischen Beschichtung an, wie sie in der EP 0 407 809 B1 beschrieben werden.

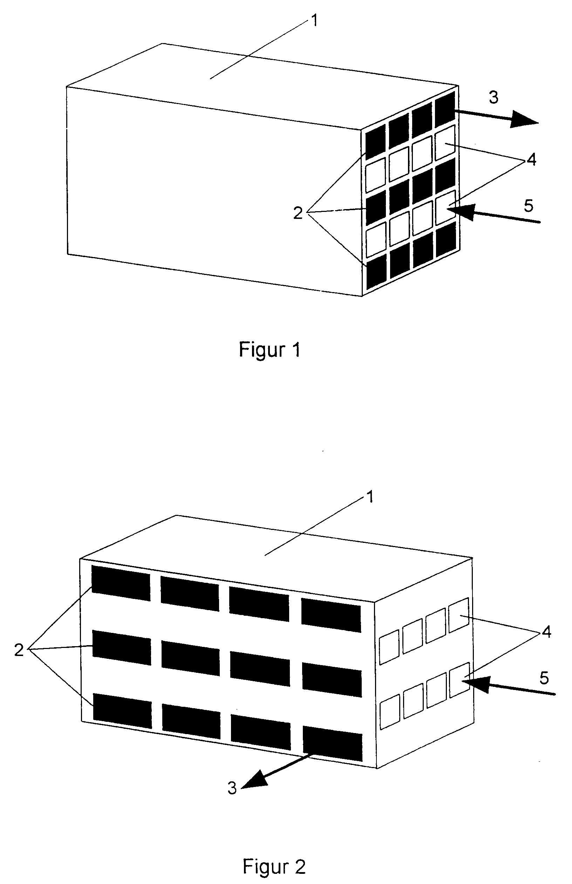

Die Erfindung wird anhand der nachfolgenden Beispiele verdeutlicht. Figur 1 und 2 zeigen mögliche Reaktorgeometrien. Mit 1 ist hierbei jeweils der monolithische Reaktor bezeichnet. Bei dem Reaktor gemäß Figur 1 liegen die Heizkanäle 2 und Reaktionskanäle 4 parallel zueinander und sind abwechselnd lagenweise angeordnet. Heiz- und Reaktionskanäle werden vom Heizgas 3 (Mischung aus Brenngas und sauerstoffhaltigem Gas) und den Reaktanden 5 im Gegenstrom durchströmt. In Figur 2 sind Heiz- und Reaktionskanäle ebenfalls abwechselnd in Lagen übereinander angeordnet. Ihre Achsenrichtungen schließen einen Winkel von 90° ein. Die Heizkanäle sind in diesem Fall rechteckförmig ausgebildet.

### Vergleichsbeispiel

Zur Herstellung von Blausäure gemäß dem aus dem Stand der Technik bekannten Verfahren wurde ein 2,1 m langes Rohr aus Aluminiumoxid mit einem Innendurchmesser von 17,8 mm als Reaktionsrohr verwendet. Das resultierende Reaktionsvolumen betrug 523 ml. Das Rohr wurde mit einem Katalysator gemäß Beispiel 2 aus EP 0 407 809 B1 beschichtet und nach dem Verdunsten des Lösemittels (abweichend von Beispiel 2 aus EP '809 wurde statt Ethanol als Lösungsmittel Toluol eingesetzt) in 12 Stunden von außen auf 1320°C aufgeheizt. Während dieser Calcinier- und Formierphase wurde durch das Reaktionsrohr ein Ammoniakstrom von 32 Mol/h geleitet. Zur Herstellung von Blausäure wurde anschließend dem Ammoniakstrom Methan zugegeben bis ein Methanstrom von 30,5 Mol/h erreicht war. Die Analyse des Eduktstromes ergab eine Blausäure-Ausbeute von 91 % bezogen auf den eingesetzten Methanstrom. Dies entsprach einer Raum-Zeit-Ausbeute von 1434 g Blausäure pro Liter Reaktionsvolumen und Stunde. Die zur Erzeugung dieser Blausäure benötigte Energie betrug 58,9 MJ/lh. Daraus errechnet sich ein Energiebedarf von 41,1 MJ für die Erzeugung von 1 kg Blausäure.

### Beispiel 1

Zur erfindungsgemäßen Herstellung von Blausäure wurde wie folgt vorgegangen: Ein monolithischer Reaktor wie in Figur 1 mit einer Länge von 50 cm und einer Querschnittsfläche von 2,73 cm x 2,73 cm und einer Kanaldichte von 15,5 Kanälen/cm² (entsprechend 100 cpsi [channels per square inch]) wurde mit einem Katalysator wie im Vergleichsbeispiel so beschichtet, daß nur jede zweite Kanalreihe Katalysator enthielt, während die anderen Kanalreihen der Beheizung dienten. Der Monolith bestand aus Aluminiumoxid. Reaktions- und Heizgase wurden im Gegenstrom geführt. Die freie Querschnittsfläche aller Kanäle des Monolithen betrug 1 cm². Da nur jede zweite Kanalreihe für die Reaktion benutzt wurde, belief sich das Reaktionsvolumen in diesem Beispiel auf nur 25 ml.

Nach dem Trocknen wurde der Katalysator mit einem Ammoniakfluß von 3 Mol/h durch die Reaktionskanäle bei laufender Verbrennung in den Heizkanälen für 12 Stunden vorbehandelt. Nach der Vorbehandlung wurde schrittweise Methan bis zu einem Methanfluß von 2,9 Mol/h zugegeben. Dabei wurde schließlich eine Ausbeute von 92 % Blausäure, bezogen auf Methan, bei 1170°C erreicht, was einer Raum-Zeit-Ausbeute von 2881 g/lh entspricht. Die zur Erzeugung benötigte Energie betrug 83,3 MJ/lh. Daraus ergibt sich ein Energiebetrag von 20,3 MJ pro Kilogramm erzeugter Blausäure.

### Beispiel 2

Zur erfindungsgemäßen Herstellung von Blausäure wurde ein monolithischer Reaktor wie in Figur 1 mit einer Länge von 50 cm und einer Querschnittsfläche von 7 x 7 cm eingesetzt. Die Kanaldichte des Reaktors betrug 3,56 cm⁻² (entsprechend 23 cpsi) und sein Reaktionsvolumen 900 ml. Die freie Querschnittsfläche aller Kanäle des Monolithen betrug in diesem Fall 36 cm².

Der Katalysator wurde mit 90 Mol/h Ammoniak vorbehandelt und anschließend mit 85,5 Mol/h Methan beaufschlagt. Es wurde bei 1300°C eine Ausbeute von 91 % Blausäure, bezogen auf Methan, gefunden, was einer Raum-Zeit-Ausbeute von 2334 g/lh entspricht. Die zur Herstellung benötigte Energie betrug 75,8 MJ. Daraus ergibt sich ein Energiebetrag von 32,5 MJ zur Erzeugung von 1 kg Blausäure.

Wie diese Beispiele zeigen, können durch die erfindungsgemäße Verwendung eines monolithischen Reaktors, der im Gegenstrom mit den Heiz- und Reaktionsgasen beaufschlagt wird, der Energiebetrag für die Herstellung von Blausäure wesentlich vermindert, und die Raum-Zeit-Ausbeute erhöht werden.

## Patentansprüche

1. Verfahren zur Herstellung von Blausäure nach dem sogenannten BMA-Verfahren durch Reaktion der Reaktanden Methan und Ammoniak zu Blausäure in einem durch Verbrennung eines Brenngases beheizten und mit einem Katalysator beschichteten Reaktor,
**dadurch gekennzeichnet**,
daß der Reaktor in monolithischer Form mit einer gesonderten Anordnung von Heiz- und Reaktionskanälen aufgebaut ist, wobei die Heizkanäle vom Brenngas und einem sauerstoffhaltigen Gas und die auf ihren Innenwandungen mit dem Katalysator beschichteten Reaktionskanäle von den Reaktanden durchströmt werden und daß das Brenngas in den Heizkanälen verbrannt wird.

2. Verfahren nach Anspruch 1,
**dadurch gekennzeichnet**,
daß die Heiz- und Reaktionskanäle des Reaktors lagenweise angeordnet sind und die Achsenrichtungen von Heiz- und Reaktionskanälen einen Winkel zwischen 0 und 90° einschließen.

3. Verfahren nach Anspruch 2,
**dadurch gekennzeichnet,**
daß Heiz- und Reaktionskanäle kreuzweise zueinander angeordnet sind (Winkel 90°).

4. Verfahren nach Anspruch 2,
**dadurch gekennzeichnet**,
daß Heiz- und Reaktionskanäle parallel zueinander liegen (Winkel 0°).

5. Verfahren nach Anspruch 4,
**dadurch gekennzeichnet**,
daß Brenngas und Reaktanden im Gleich- oder Gegenstrom durch den Reaktor strömen.

6. Verfahren nach einem der vorstehenden Ansprüche
**dadurch gekennzeichnet**,
daß Heiz- und Reaktionskanäle jeweils in parallelen Schichten zusammengefaßt sind, die ein oder mehrere Lagen von Heiz- bzw. Reaktionskanälen umfassen.

7. Verfahren nach Anspruch 6,
**dadurch gekennzeichnet**,
daß die Dicken der in Schichten aus mehreren Lagen zusammengefaßten Heiz- bzw. Reaktionskanälen 25 mm nicht übersteigen.

8. Verfahren nach Anspruch 1,
**dadurch gekennzeichnet**,
daß Heiz- und Reaktionskanäle über den Querschnitt des Reaktors in einem beliebigen Muster angeordnet sind.

9. Verfahren nach einem der vorstehenden Ansprüche,
**dadurch gekennzeichnet**,
daß der Reaktor Kanaldichten zwischen 0,1 und 100 cm⁻² aufweist und aus Oxid-, Carbid- oder Nitridkeramiken oder Mischkeramiken gefertigt ist.

## Claims

1. Process for the production of hydrocyanic acid by the so-called BMA process by reaction of the reactants methane and ammonia to form hydrocyanic acid in a reactor heated by combustion of a fuel gas and coated with a catalyst,
characterised in that
the reactor is constructed in monolithic form having a separate arrangement of heating ducts and reaction ducts, and the fuel gas and an oxygen-containing gas flow through the heating ducts and the reactants pass through the reaction ducts, the inner walls of the latter being coated with the catalyst, and that the fuel gas undergoes combustion in the heating ducts.

2. Process according to claim 1,
characterised in that
the heating ducts and the reaction ducts of the reactor are arranged in layers and the axial directions of the heating ducts and the reaction ducts enclose an angle of between 0 and 90°.

3. Process according to claim 2,
characterised in that
the heating ducts and the reaction ducts are arranged transversely to one another (angle 90°).

4. Process according to claim 2,
characterised in that
the heating ducts and the reaction ducts lie parallel to one another (angle 0°).

5. Process according to claim 4,
characterised in that
fuel gas and reactants pass through the reactor in cocurrent or countercurrent flow.

6. Process according to any of the preceding claims,
characterised in that
the heating ducts and the reaction ducts are each combined in parallel layers which comprise one or more constituent layers of heating ducts and reaction ducts respectively.

7. Process according to claim 6,
characterised in that
the thicknesses of the heating ducts and the reaction ducts respectively combined in layers comprising several constituent layers do not exceed 25 mm.

8. Process according to claim 1,
characterised in that
the heating ducts and the reaction ducts are arranged in any pattern across the transverse section of the reactor.

9. Process according to one of the preceding claims,
characterised in that
the reactor has ducts of between 0.1 and 100 cm⁻² in thickness and is manufactured from oxide ceramic, carbide ceramic or nitride ceramic, or from mixed ceramic.

## Revendications

1. Procédé de production d'acide cynahydrique selon le procédé appelé BMA par réaction des réactifs méthane et ammoniac pour donner de l'acide cyanhydrique dans un réacteur chauffé par combustion d'un gaz combustible et recouvert d'un catalyseur,
caractérisé en ce que
- le réacteur est constitué sous forme monolithique avec une disposition particulière des canaux de chauffage et de réaction, les canaux de chauffage étant parcourus par le gaz combustible et un gaz contenant de l'oxygène et les canaux de réaction recouverts de catalyseurs à leur paroi interne étant parcourus par des réactifs,
- on fait brûler le gaz combustible dans les canaux de chauffage.

2. Procédé selon la revendication 1,
caractérisé en ce que
- les canaux de chauffage et de réaction du réacteur sont disposés en couches
- les directions des axes des canaux de chauffage et de réaction présentent un angle compris entre 0 et 90°.

3. Procédé selon la revendication 2,
caractérisé en ce que
les canaux de chauffage et de réaction sont disposés en croix les uns par rapport aux autres (angle de 90°)

4. Procédé selon la revendication 2,
caractérisé en ce que
les canaux de chauffage et de réaction sont disposés parallèlement entre eux (angle de 0°)

5. Procédé selon la revendication 4,
caractérisé en ce que
le gaz combustible et les réactifs s'écoulent dans le même sens ou à contre-courant dans le réacteur.

6. Procédé selon l'une des renvedications précédentes,
caractérisé en ce que
les canaux de chauffage et de réaction sont toujours rassemblés en couches parallèles qui comprennent une ou plusieurs séries de strates de canaux de chauffage ou de réaction.

7. Procédé selon la revendication 6, caractérisé en ce que
l'épaisseur des canaux de chauffage ou de réaction rassemblés en couches à partir de plusieurs strates ne dépassent pas 25 mm.

8. Procédé selon la revendication 1, caractérisé en ce que
les canaux de chauffage et de réaction sont disposés sur la section du réacteur selon un type quelconque.

9. Procédé selon l'une des revendications précédentes,
caractérisé en ce que
le réacteur présente des densités de canaux comprises entre 0,1 et 100 cm⁻² et est fabriqué en céramiques d'oxydes, de carbures ou de nitrures ou en céramiques mixtes.
